# NOUVEAU FASCICULE DE BREVET EUROPEEN

(11) **EP 1 782 719 B2**
(45) Date de publication et mention de la décision concernant l'opposition: **11.07.2018**
(45) Mention de la délivrance du brevet: 02.12.2009
(21) Numéro de dépôt: 06291609.3
(22) Date de dépôt: 16.10.2006
(51) Int. Cl.: A47J 43/08

(54) **Appareil électrique de traitement d'aliments, doté de moyens automatiques de réglage de vitesse, et outil destiné à un tel appareil**
Elektrisches Gerät zum Behandeln von Nahrungsmitteln, mit Mittel zum Regeln der Geschwindigkeit, und Werkzeug für solch ein Gerät
Electric device for treating food, having automatic means for adjusting the speed, and tool for such a device

(30) Priorité: 03.11.2005 FR 0511208
(43) Date de publication de la demande: 09.05.2007
(73) Titulaire: Electrolux Professionnel, 60300 Senlis (FR)
(72) Inventeur: Bernard, Marc, 23150 Lepinas (FR); Descomps, Xavier, 23200 Blessac (FR); Paturel, Bruno, 23200 Aubusson (FR)
(74) Mandataire: Lavoix

(56) Documents cités:
- EP-A- 0 440 051
- WO-A1-2005/063091
- DE-A1- 10 159 395
- DE-C1- 4 422 066
- DE-T2- 60 029 600
- US-A1- 2004 100 862

## Description

La présente invention concerne un appareil électrique de traitement d'aliments, plus particulièrement du type utilisé dans le domaine de la restauration collective ou de la préparation alimentaire industrielle.

L'invention est également susceptible de s'appliquer à un appareil domestique.

L'invention concerne plus précisément un appareil comprenant :
- une embase fixe,
- un outil de traitement, monté de façon mobile par rapport à l'embase, et pourvu de moyens d'identification,
- des moyens d'entraînement de l'outil, et
- des moyens de commande desdits moyens d'entraînement, comprenant des moyens de détection du type de l'outil, sensibles auxdits moyens d'identification et logés dans l'embase fixe.

De tels appareils peuvent être prévus pour exécuter plusieurs types d'opérations, consistant par exemple à couper, hacher, battre, mélanger, etc. Dans de tels appareils, qui sont dits « multifonctions », l'outil est démontable et les moyens d'entraînement peuvent recevoir plusieurs types d'outils différents.

Lors du traitement des aliments, la vitesse doit être soigneusement sélectionnée en fonction du type d'opération à accomplir, mais également en fonction du type de produits à traiter.

On a déjà proposé dans l'état de la technique de doter des appareils électroménagers « multifonctions » de moyens permettant d'assister l'utilisateur dans le réglage de la vitesse d'entraînement de l'outil, en fonction de l'opération à accomplir.

En particulier, dans le brevet EP 0 440 051, il a déjà été proposé de doter l'embase d'un robot « multifonctions » de moyens de détection à distance d'un signal d'identification (par exemple magnétique) émis par un organe, tel qu'un aimant, logé dans le récipient formant chambre de traitement.

Cette technologie repose sur un principe, qui consiste à caractériser une utilisation du robot par un type de récipient mis en place, et à associer une vitesse de fonctionnement à l'utilisation ainsi déduite.

Un tel fonctionnement n'est pas entièrement satisfaisant pour les appareils « multifonctions » à usage professionnel, pour lesquels des outils différents peuvent être utilisés avec un même récipient formant chambre de traitement. En d'autres termes, la nature du récipient utilisé peut ne pas suffire à caractériser l'usage qui doit être fait de l'appareil.

Dans le document DE 44 22 086, il a été proposé des moyens d'identification magnétiques, l'outil étant indentifiable par les trains d'impulsions électriques générées, dans un circuit détecteur, par le passage, au voisinage du circuit, d'aimants contenus dans l'outil.

Cette technique nécessite une phase d'initialisation, qui se traduit par l'entraînement de l'outil à vide durant un certain temps.

En outre, cette technique ne convient pas pour certains types de mouvement d'outil, par exemple les mouvements planétaires de certains batteurs-mélangeurs ou des machines à pétrir, puisque la distance minimale entre l'aimant (ou les aimants) et le détecteur varie, et peut atteindre une valeur élevée. La fiabilité de la technique dans ce type d'utilisation n'est donc pas optimale.

L'invention vise à remédier cet inconvénient, et à proposer un appareil du type exposé précédemment, notamment à usage professionnel, qui permette de régler automatiquement la vitesse d'entraînement de l'outil, avec une fiabilité optimale quel que soit le type de mouvement de l'outil.

L'invention vise également à supprimer la phrase d'initialisation prévue pour identifier l'outil.

A cet effet, un appareil conforme à l'invention est indiqué dans la revendication 1.

Suivant des caractéristiques avantageuses de l'appareil conforme à l'invention :
- les moyens de commande comprennent un sélecteur de mode, permettant de sélectionner un mode parmi au moins un mode manuel et un mode automatique de réglage de la vitesse de l'outil ;
- l'outil est choisi dans un groupe comprenant un disque de coupe-légumes, un disque de râpe, un couteau de préparateur culinaire, un outil de batteur, un plateau d'éplucheuse, et un outil de mixeur plongeant ; et
- les moyens de commande comprennent des moyens d'acquisition d'une information relative à l'emplacement de l'appareil, et sont adaptés pour déterminer la compatibilité du type d'outil détecté avec l'emplacement de l'appareil.

Un mode particulier de réalisation de l'invention va maintenant être décrit plus en détail, en référence aux dessins annexés, sur lesquels :
- la Figure 1 est une vue en perspective d'un appareil conforme à l'invention, dans une configuration de coupe-légumes avec poussoir relevé ;
- la Figure 2 est une vue analogue avec capot ouvert et poussoir baissé ;
- la Figure 3 est une vue en perspective éclatée de l'appareil représenté aux Figures 1 et 2 ;
- la Figure 4 est une vue en coupe, dans un plan médian vertical, de l'appareil des Figures 1 à 3, dans une position d'utilisation ;
- la Figure 5 est une vue en perspective d'un appareil conforme à l'invention, dans une configuration de préparateur culinaire, dans une position d'utilisation ; et
- la Figure 6 est une vue en perspective éclatée de l'appareil de la Figure 5.

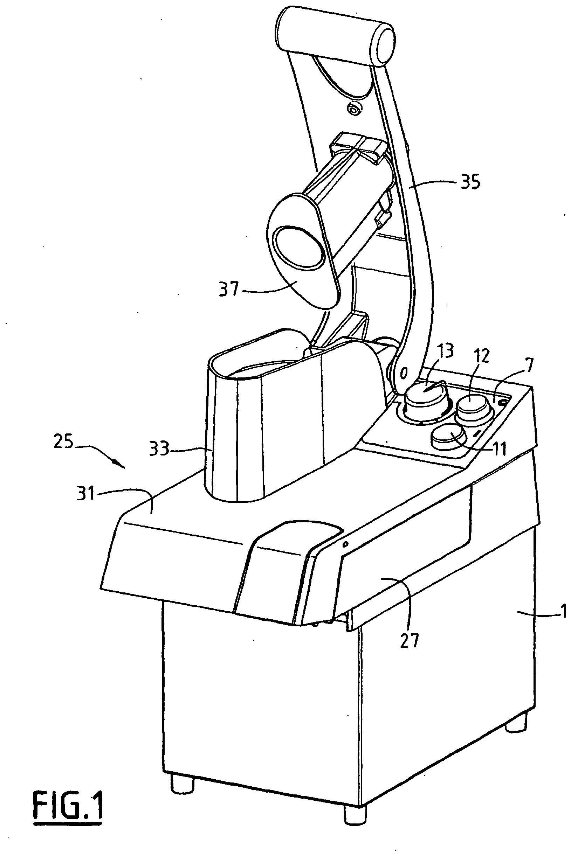

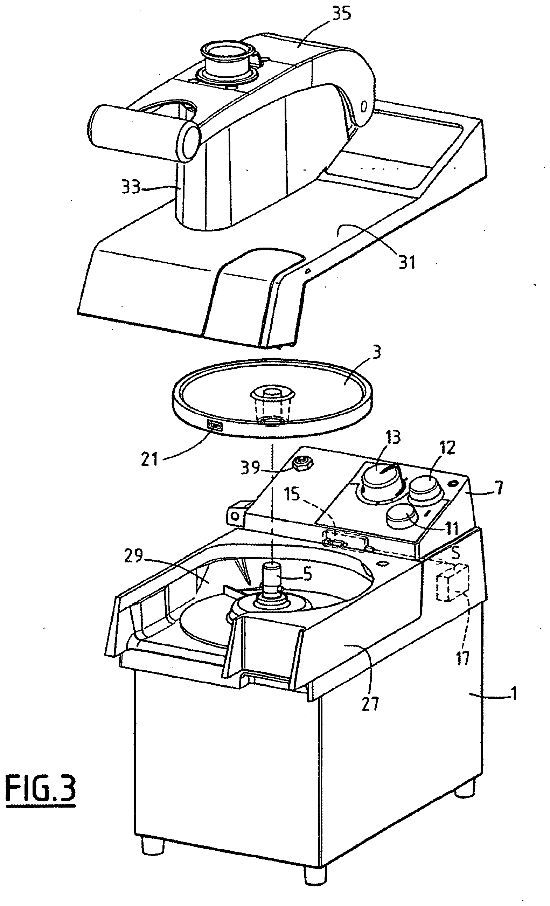

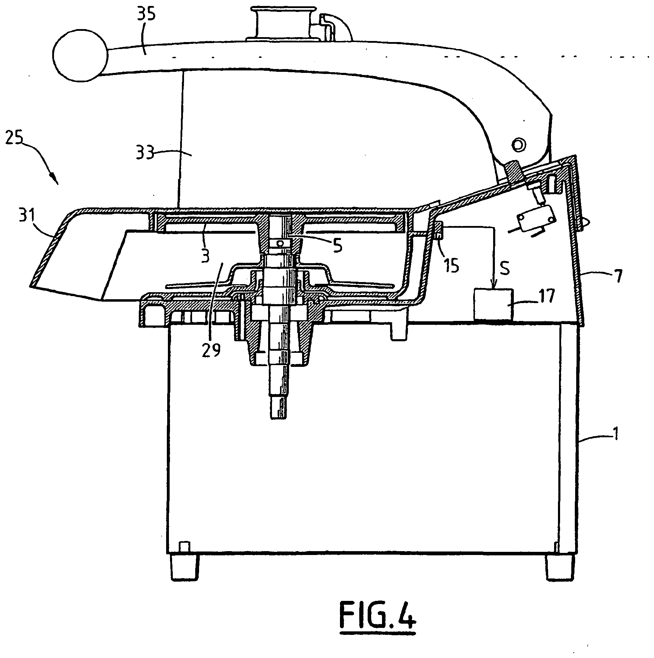

Sur les Figures 1 à 4, on a représenté un appareil électrique de traitement d'aliments, du type coupe-légumes à usage professionnel.

Cet appareil comporte essentiellement une embase 1 fixe (c'est-à-dire constituant une référence fixe pour l'ensemble de l'appareil), reposant sur le sol ou sur un plan de travail, un outil de traitement 3 monté rotatif sur l'embase, et des moyens d'entraînement en rotation de l'outil 3.

De façon classique, les moyens d'entraînement comprennent un moteur électrique (non représenté) logé dans l'embase 1, un arbre 5 d'entraînement en rotation de l'outil, et un mécanisme de réduction (non représenté) assurant la transmission du mouvement en sortie du moteur à l'arbre 5. L'arbre 5 fait partiellement saillie verticalement de l'embase 1, et peut recevoir à emmanchement, par son extrémité libre, l'outil 3.

L'appareil comporte en outre des moyens de commande du moteur électrique, qui sont agencés dans une console de commande 7 faisant partie de l'embase.

Ces moyens de commande comprennent par exemple des boutons de commande manuels, tels qu'un bouton-poussoir de marche 11, un bouton-poussoir d'arrêt 12, et un bouton de sélection de vitesse 13. Les moyens de commande comprennent en outre des moyens automatiques de détection du type de l'outil, comportant un émetteur/récepteur 15 de signaux radiofréquences, placé à l'intérieur de la console 7, et un calculateur 17 relié à ce détecteur. L'émetteur/récepteur 15 peut également être appelé « lecteur ».

Le lecteur 15 est prévu pour communiquer avec des moyens d'identification prévus sur l'outil 3, qui comprennent une étiquette RFID 21.

De façon classique, l'étiquette RFID 21 comprend essentiellement une antenne et un circuit intégré associé, ayant des moyens de mémorisation d'informations. Dans le cas présent, ces informations sont relatives à l'outil, notamment le type de l'outil. Ces informations peuvent également comprendre toute donnée utile à son identification, telle que le nombre de cycles d'utilisation.

Le fonctionnement des moyens de commande sera explicité ultérieurement.

On notera que l'embase, les moyens d'entraînement, et les moyens de commande, constituent des organes qui sont communs à toutes les configurations de l'appareil. Ces configurations correspondent chacune à une ou plusieurs utilisations particulières de l'appareil.

Dans la configuration de l'appareil représentée sur les Figures 1 à 4, l'outil 3 est un disque de coupe-légumes ayant des bords tranchants radiaux (non visibles sur les Figures). Cet outil 3, fixé de manière démontable à l'extrémité libre de l'arbre 5, est associé à un ensemble d'accessoires 25 de l'appareil. Dans l'exemple des Figures 1 à 4, l'ensemble d'accessoires 25 comprend essentiellement une cuve 27 montée sur l'embase, définissant dans la région périphérique de l'arbre 5, une chambre 29 de traitement des aliments et de réception des aliments traités.

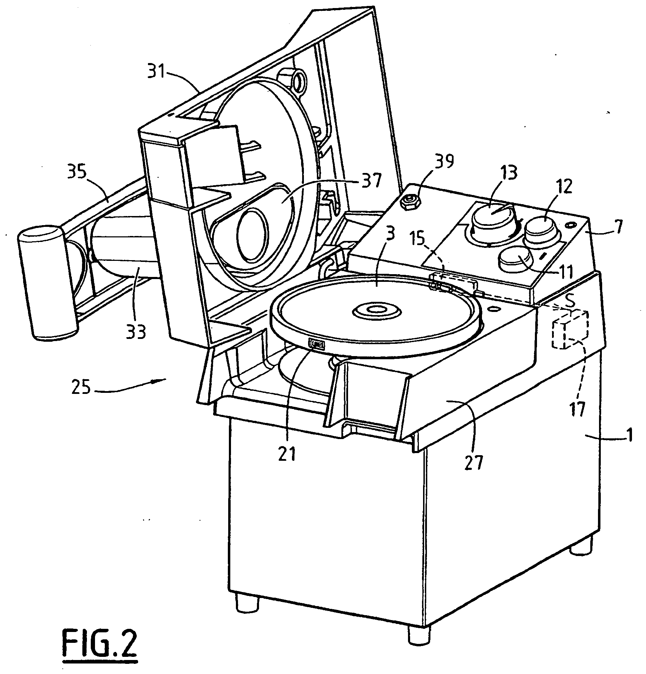

L'ensemble d'accessoires 25 comprend en outre un capot 31 de fermeture de la chambre de traitement, articulé sur la console 7, de façon à pouvoir prendre une position ouverte laissant libre accès à l'outil 3 et à la chambre de traitement 29 (Figure 2), et une position fermée de travail (Figure 1).

Le capot 31 est muni d'une cheminée 33 d'introduction des aliments débouchant dans la chambre 29, au droit de l'outil 3, et d'un levier-pressoir 35 articulé. Le levier 35 est solidaire d'un plateau de pression 37, prévu pour coulisser dans la cheminée 33, et ainsi presser les aliments sur l'outil 3 lors de l'actionnement du levier 35.

On notera que l'appareil est doté d'un interrupteur de sécurité 39 agencé sur la console 7, et prévu pour couper l'alimentation électrique du moteur lors de l'ouverture du capot 31 ou lors du relèvement du levier 35.

On va à présent décrire plus en détail les moyens mis en oeuvre dans l'appareil pour déterminer le type de l'outil monté sur l'arbre 5, ainsi que leur fonctionnement.

Au préalable, pour mieux comprendre l'intérêt de l'invention, il faut souligner que la configuration de l'appareil représentée sur les Figures 1 à 4, c'est-à-dire en présence de l'ensemble d'accessoires 25 correspondant à l'utilisation en coupe-légumes, l'outil 3 peut être constitué par exemple d'un plateau à lames tranchantes radiales, ou encore d'une râpe rotative, selon que l'appareil soit configuré pour couper en sections ou râper des aliments, notamment des légumes.

A titre d'exemple, on signalera que ces deux utilisations peuvent nécessiter des vitesses d'entraînement de l'outil nettement différentes : en particulier pour couper des pommes de terre on peut préconiser une vitesse d'entraînement de l'ordre de 300 tr./min., alors que pour râper des carottes, on peut préconiser une vitesse de l'ordre de 700 tr./min.

On comprend ainsi que pour obtenir un réglage optimal de la vitesse d'entraînement de l'outil, il est nécessaire de distinguer, par exemple, un cas d'utilisation d'un plateau à bord tranchant d'un cas d'utilisation d'un plateau à râper. Suivant un autre exemple, il peut être nécessaire de distinguer un cas d'utilisation d'un plateau à bord tranchant conçu pour trancher des tomates d'un cas d'utilisation d'un plateau à bord tranchant conçu pour trancher des pommes de terre.

L'invention permet d'opérer cette distinction et de détecter automatiquement le type d'outil mis en place dans l'appareil, dès lors que des informations correspondantes sont enregistrées dans les mémoires des étiquettes RFID associées à chaque type d'outil. Le lecteur 15 est adapté pour détecter le type d'outil en communiquant avec l'étiquette RFID, dès lors qu'un outil est mis en place dans l'appareil et que le lecteur est activé, par exemple par la mise sous tension de l'appareil ou l'activation des moyens d'entraînement.

Les informations d'identification de l'outil, obtenus par le lecteur 15, sont transmises au calculateur 17 sous la forme d'un signal S.

Le calculateur 17 élabore en réponse une consigne de vitesse transmise par un circuit adapté au moteur électrique, sous la forme d'un signal de commande. La détection du type de l'outil peut être exécutée sans étape d'initialisation, qui est une étape d'entraînement à vide distincte d'une étape de traitement des aliments.

Selon un cas particulier, l'absence d'outil peut être détectée par le lecteur 15, dès lors que ce dernier ne reçoit pas de signal en réponse au signal émis. Les moyens de commande sont de préférence adaptés pour que, dans un tel cas, l'activation des moyens d'entraînement soit interdite, et ce jusqu'à l'obtention en réponse d'un signal significatif de la présence d'un outil.

Naturellement, les moyens de commande de l'appareil sont prévus de façon que l'utilisateur puisse choisir parmi un mode manuel de réglage de la vitesse, et le mode automatique tel qu'il a été décrit précédemment. A cet effet, les moyens de commande comprennent un sélecteur de mode, qui n'a pas été représenté sur les Figures, pouvant être manoeuvré par l'utilisateur afin de faire fonctionner l'appareil selon au moins l'un de ces deux modes. Par mode automatique, on peut également comprendre un mode semi-automatique, dans lequel les moyens de détection associés au calculateur déterminent une consigne de vitesse, sous la forme d'une gamme ou d'un intervalle de vitesse, l'utilisateur ayant seulement la faculté de régler une valeur de vitesse à l'intérieur de cet intervalle déterminé automatiquement, au moyen du sélecteur de vitesse 13. Dans le mode manuel de commande, le lecteur 15 est désactivé, et le réglage de la vitesse est effectué au moyen du sélecteur 13.

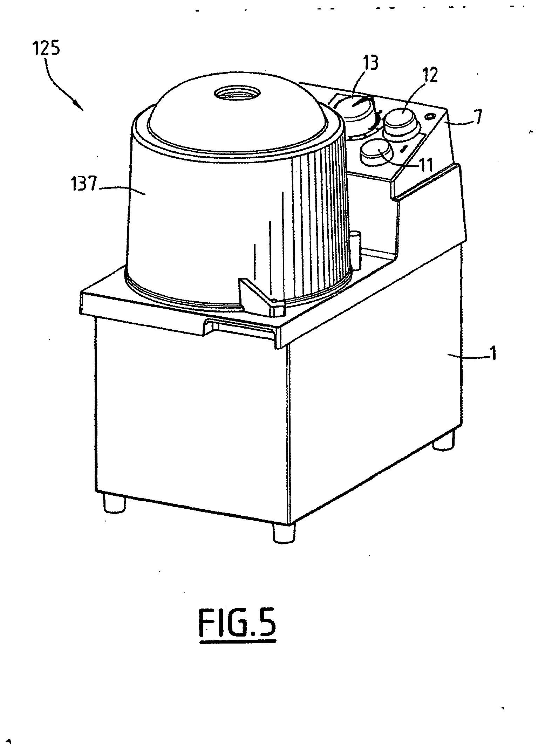

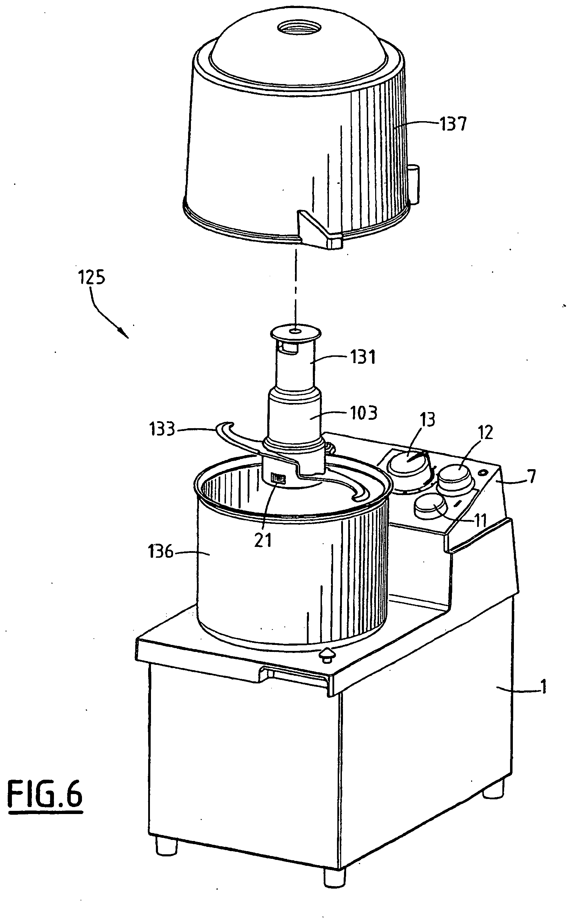

Sur les Figures 5 et 6, on a illustré un autre appareil conforme à l'invention, correspondant à une configuration et à une utilisation différentes de celles de l'appareil représenté sur les Figures 1 à 4.

Cet appareil est réalisé sur la même base que celui décrit précédemment, en ce qu'il comporte un outil 103 et un ensemble d'accessoires 125 différents de ceux décrits précédemment, mais une base d'appareil commune. Cette base commune est constituée essentiellement de l'embase 1, des moyens d'entraînement, et des moyens de commande, déjà décrits en référence aux Figures 1 à 4. Cette base commune ne sera donc pas décrite à nouveau.

L'outil 103 est ici un couteau rotatif de préparateur culinaire, comprenant essentiellement un moyeu 131 et deux lames radiales 133. Une étiquette RFID 21 est fixée sur le moyeu, par exemple par collage. L'ensemble d'accessoires 125 comprend, de façon classique, un récipient 136 sensiblement cylindrique, définissant intérieurement la chambre de traitement dans laquelle est disposé l'outil 103, et un couvercle 137 de fermeture de la chambre de traitement.

L'étiquette RFID placée sur l'outil constitue les moyens d'identification automatiques de ce dernier. Selon le type de produit à traiter ou selon le type de travail à réaliser, il peut être souhaitable d'entraîner le couteau 103 à une vitesse de rotation comprise entre 3000 et 4000 tr./min. Des vitesses aussi élevées, qui seraient appliquées à des plateaux à râper ou à couper tels que décrits précédemment, seraient susceptibles de provoquer un endommagement de l'outil et plus généralement de l'appareil, ou un mauvais travail des produits.

On comprend, grâce à l'illustration de l'invention donnée par les deux exemples de réalisation décrits, que les outils 3 et 103 sont différenciés automatiquement par les informations d'identification pré-enregistrées dans la mémoire de l'étiquette RFID 21 associée, ces informations étant obtenues par le lecteur 15 lorsque ce dernier est activé et mis en communication avec l'étiquette RFID.

Cela n'a pas été représenté sur les Figures, mais les moyens de commande de l'appareil comprennent selon l'invention revendiquée des moyens d'acquisition du type de produits à traiter, notamment sous la forme de sélecteurs agencés sur la console 7, ou éventuellement sous la forme d'un détecteur (par exemple également un lecteur RFID ou un lecteur de codes-barres pouvant lire des informations présentes sur un emballage de produits à traiter). Dans un tel cas, l'invention prévoit que les moyens de commande puissent déterminer si l'outil mis en place dans l'appareil, et détecté par les moyens de détection décrits précédemment, est compatible ou non avec la nature des produits à traiter, tels que déterminés par les moyens d'acquisition.

Lorsque les moyens de commande, par comparaison des informations obtenues d'une part par les moyens d'acquisition du type de produits et d'autre part par les moyens de détection du type de l'outil, déterminent que l'outil mis en place est incompatible avec la nature des produits à traiter, ils peuvent
- interdire l'activation des moyens d'entraînement, et ce jusqu'à la détection d'un outil ou jusqu'au lancement d'une étape ultérieure d'acquisition ; et/ou
- délivrer à l'utilisateur, par le biais de signaux sonores, visuels, ou d'un affichage, une information d'incompatibilité.

Ainsi, l'invention procure l'avantage d'une grande sécurité de fonctionnement, dans la mesure où elle permet d'assister l'utilisateur dans son choix de la vitesse de fonctionnement, et d'éviter des erreurs de réglage préjudiciables à l'appareil et éventuellement à l'utilisateur lui-même.

De façon analogue, les moyens de commande de l'appareil peuvent comprendre des moyens d'acquisition d'une information relative à l'emplacement de l'appareil, en particulier de sa localisation dans une chaîne de traitement d'aliments. Cette information peut notamment être préenregistrée dans une mémoire prévue à cet effet, lors de l'installation de l'appareil dans la chaîne de traitement. Dans un tel cas, il est avantageux de prévoir que les moyens de commande puissent déterminer si l'outil mis en place dans l'appareil est compatible ou non avec l'emplacement de l'appareil dans la chaîne de traitement, tel que déterminé par les moyens d'acquisition correspondants.

De façon encore analogue à ce qui a été décrit précédemment, lorsque les moyens de commande déterminent que l'outil mis en place est incompatible avec l'emplacement de l'appareil dans la chaîne de traitement, ils peuvent interdire l'activation des moyens d'entraînement et/ou délivrer une information d'incompatibilité.

Grâce à cette disposition, il est possible de réduire considérablement le risque de réalisation d'opérations sur des aliments dans des zones non appropriées de la chaîne de traitement. L'utilisateur est ainsi assisté dans le respect des normes sanitaires extrêmement strictes, qui sont en vigueur dans le domaine de la préparation alimentaire pour la restauration collective.

On notera que la compatibilité de l'outil mis en place pourra être déterminée de façon conjuguée par rapport au type d'aliments à traiter et à l'emplacement de l'appareil.

L'invention est d'un grand intérêt pour des appareils « multifonctions » du type de ceux représentés sur les Figures, avec lesquels de nombreuses opérations différentes de traitement d'aliments peuvent être exécutés, moyennant le changement de l'outil et éventuellement des accessoires. En effet, la multiplicité des opérations qui peuvent être réalisées avec la même base commune d'appareil accroît le nombre d'erreurs potentielles de réglage de la part de l'utilisateur. Ces risques sont minimisés par l'apport des moyens automatiques de détection d'outil, tels que prévus dans l'invention.

Cet avantage est là encore d'autant plus important pour les appareils à usage professionnel. En effet, comme évoqué plus haut, les règlements en vigueur dans le domaine de la restauration collective imposent des conditions très strictes de circulation des produits alimentaires entre les différents appareils, généralement installés à demeure. De ce fait, la polyvalence de ces appareils, décisive pour la souplesse des chaînes de préparation, est une contrainte d'importance croissante dans leur conception.

De plus, les conditions optimales d'utilisation des outils peuvent être pré-établies par le constructeur, l'utilisateur de l'appareil pouvant bénéficier de l'expérience et des préconisations du constructeur, sans effectuer lui-même de travail de réglage.

Bien entendu, l'invention s'applique à des configurations d'appareil différentes de celles qui ont été décrites en référence aux Figures, et notamment à d'autres types d'outils, tels que des fouets de batteurs, ou encore des plateaux d'éplucheuses.

## Revendications

1. Appareil électrique de traitement d'aliments comprenant :
- une embase (1),
- un outil de traitement (3 ;103), monté de façon mobile par rapport à l'embase (1), et pourvu de moyens d'identification (21),
- des moyens (5) d'entraînement de l'outil, et
- des moyens (11, 12, 13, 15, 17) de commande desdits moyens d'entraînement, comprenant des moyens (15) de détection du type de l'outil (3 ;103), sensibles auxdits moyens d'identification (21) et logés dans l'embase fixe (1),
**caractérisé en ce que** les moyens d'identification comprennent une étiquette RFID (21), et les moyens de détection comprennent un émetteur/récepteur de signaux radiofréquences (15), prévu pour communiquer avec ladite étiquette RFID (21), et **en ce que** les moyens de commande comprennent des moyens d'acquisition du type de produits à traiter, et sont adaptés pour déterminer la compatibilité du type d'outil détecté avec le type de produits à traiter.

2. Appareil selon la revendication 1, **caractérisé en ce que** les moyens de commande (11, 12, 13, 15, 17) comprennent un sélecteur de mode, permettant de sélectionner un mode parmi au moins un mode manuel et un mode automatique de réglage de la vitesse de l'outil.

3. Appareil selon la revendications 1 ou 2, **caractérisé en ce que** l'outil (3 ;103) est choisi dans un groupe comprenant un disque de coupe-légumes, un disque de râpe, un couteau de préparateur culinaire, un outil de batteur, un plateau d'éplucheuse, et un outil de mixeur plongeant.

4. Appareil selon l'une quelconque des revendications 1 à 3, **caractérisé en ce que** les moyens de commande comprennent des moyens d'acquisition d'une information relative à l'emplacement de l'appareil, et sont adaptés pour déterminer la compatibilité du type d'outil détecté avec l'emplacement de l'appareil.

## Patentansprüche

1. Elektrisches Gerät zur Behandlung von Nahrungsmitteln, umfassend:
- einen Sockel (1),
- ein Behandlungswerkzeug (3; 103), das in Bezug zum Sockel (1) beweglich montiert und mit Identifikationsmitteln (21) versehen ist,
- Antriebsmittel (5) für das Werkzeug, und
- Steuermittel (11, 12, 13, 15, 17) für die Antriebsmittel, umfassend Mittel (15) zur Erfassung des Werkzeugtyps (3; 103), die für die Identifikationsmittel (21) empfindlich und in dem festen Sockel (1) angeordnet sind,
**dadurch gekennzeichnet, dass** die Identifikationsmittel ein RFID-Etikett (21) umfassen, und dass die Erfassungsmittel einen Sender/Empfänger für Funksignale (15) umfassen, der dazu vorgesehen ist, mit dem RFID-Etikett (21) zu kommunizieren, und dass die Steuermittel Mittel zur Erfassung des zu behandelnden Produkttyps umfassen und dazu ausgeführt sind, dass sie die Vereinbarkeit des erfassten Werkzeugtyps mit dem zu behandelnden Produkttyp bestimmen.

2. Gerät nach Anspruch 1, **dadurch gekennzeichnet, dass** die Steuermittel (11, 12, 13, 15, 17) einen Modusauswahlschalter umfassen, der es ermöglicht, einen Modus unter mindestens einem manuellen Modus und einem automatischen Modus zur Regelung der Geschwindigkeit des Werkzeugs auszuwählen.

3. Gerät nach Anspruch 1 oder 2, **dadurch gekennzeichnet, dass** das Werkzeug (3; 103) aus einer Gruppe, umfassend eine Gemüseschneidscheibe, eine Reibe, ein Küchenmesser, einen Mixer, eine Schälplatte und einen Stabmixer, ausgewählt wird.

4. Gerät nach einem der Ansprüche 1 bis 3, **dadurch gekennzeichnet, dass** die Steuermittel Mittel zur Erfassung einer Information über die Anordnung des Geräts umfassen und dazu ausgeführt sind, die Vereinbarkeit des erfassten Produkttyps mit der Anordnung des Geräts zu bestimmen.

## Claims

1. Electrical device for processing food comprising:
- a base (1),
- a processing tool (3;103) movably mounted relative to the base (1), and provided with identification means (21),
- drive means (5) for the tool, and
- control means (11,12,13,15,17) for the said drive means, comprising detector means for the type of tool (3;103), responsive to the said identification means and accommodated in the fixed base (1),
**characterised in that** the identification means comprise an RFID label (21), and the detection means comprise a transmitter/receiver of radio frequency signals (15), provided for communication with the said RFID label (21), and **in that** the control means comprises means for establishing the type of products to be processed, and is adapted to determine the compatibility of the type of tool detected with the type of products to be processed.

2. Device according to claim 1, **characterised in that** the control means (11,12,13,15,17) comprise a mode selector, allowing the selection of a mode from at least a manual mode and an automatic mode for regulating the speed of the tool.

3. Apparatus according to claims 1 or 2, **characterised in that** the tool (3;103) is chosen from a group comprising a vegetable-cutting disk, a grater disk, a culinary preparation knife, a beater, a peeling plate, and an immersion mixer.

4. Device according to any of claims 1-3, **characterised in that** the control means comprise means for establishing information relating to the location of the device, and is adapted to determine the compatibility of the type of tool detected with the location of the device.
